# EUROPEAN PATENT SPECIFICATION

(11) **EP 3 159 262 B1**
(45) Date of publication and mention of the grant of the patent: **05.06.2019**
(21) Application number: 14894849.0
(22) Date of filing: 15.07.2014
(51) Int. Cl.: B64C 27/10, B64C 27/605, B64C 27/12

(54) **INTER-ROTOR BLADE PITCH CONTROL DEVICE OF COAXIAL DOUBLE-ROTOR HELICOPTER**
INTERROTORBLATTWINKELSTEUERUNGSVORRICHTUNG EINES HUBSCHRAUBERS MIT KOAXIALEM DOPPELROTOR
DISPOSITIF DE RÉGLAGE DU PAS DES PALES ENTRE LES ROTORS D'UN HÉLICOPTÈRE À DOUBLE ROTOR COAXIAL

(30) Priority: 19.06.2014 CN 201410275790
(43) Date of publication of application: 26.04.2017
(73) Proprietor: Qingan Group Co., Ltd., Xi'an, Shaanxi 610000 (CN)
(72) Inventor: DAI, Mengyi, Xi'an, Shaanxi 610000 (CN)
(74) Representative: Carpmaels & Ransford LLP
(86) International application number: PCT/CN2014/082245
(87) International publication number: WO 2015/192421

(56) References cited:
- WO-A2-2008/091298
- WO-A2-2008/091298
- CA-C- 2 562 570
- CA-C- 2 562 570
- CN-A- 102 658 865
- CN-A- 102 658 865
- US-A- 2 669 308
- US-A- 4 531 692
- US-A- 5 058 824
- US-B2- 7 118 340
- US-B2- 7 118 340

## Description

### Technical Field

This invention relates to a pitch control device for a coaxial double-propeller (double-rotor) helicopter, belonging to the technical field of helicopter structure. In the present application, term "propeller" is used interchangeably with term "rotor".

### Background Art

The periodic variable pitch of a current coaxial double-propeller helicopter is always realized by a steering engine controlling a lower swash plate to control the lower propeller variable pitch. To control upper propeller variable pitch, the steering gear needs to firstly control the lower swash plate, and then transfer motion to an upper swash plate via a link mechanism, only then can upper propeller variable pitch be controlled. The drawbacks are: the transmission distance of upper propeller variable pitch motion under the control of the steering gear is long; a large number of mechanisms are involved; the accumulated error of fit clearances of many links is large; and mechanical rigidity is poor, whereby affecting the pitch control precision and control of stability. Pitch control of the upper propeller in current double differential course control for coaxial double-propeller helicopters is realized by controlling a connecting rod by the steering gear, whereby the connecting rod can only control upper propeller pitch through the whole central shaft. The drawbacks are: the motion transmission distance is long; the structure is complicated; and the manufacturing of the central shaft is difficult, thereby unsuitable for use in small-sized helicopters.

US5058824A relates to a servo control system for a co-axial rotary winged aircraft having upper and lower rotors. The control system comprises command means for providing electronic command signals indicative of operator control commands in the pitch, yaw, roll, and collective axes of the aircraft; electronic mixing means for providing at least three upper, and three lower, rotor electrical servo control signals in response to said command signals; a plurality of upper swash plate servo means for controlling the pitch of the upper rotor blades of the aircraft in response to the upper rotor electrical servo control signals; and a plurality of lower swash plate servo means for controlling the pitch of the lower rotor blades of the aircraft in response to the lower rotor electrical servo control signals. US7118340B2 relates to a coaxial counter-rotating rotor system that comprises an upper rotor system; a lower rotor system; a coaxial transmission system located between and operable to counter-rotate the upper and lower rotor systems about an axis, the coaxial transmission system defining a mid-plane transverse to the axis; and an upper swashplate assembly and a lower swashplate assembly which move away from the mid-plane to generate a high collective pitch in the upper and lower rotor systems.

### Summary of the Invention

The present invention provides a pitch control device for a coaxial double-propeller helicopter as claimed hereinafter, aiming at shortening motion transmission distance, decreasing conversion, enhancing control precision and stability, as well as reducing manufacturing difficulty.

The objective of the present invention is achieved by implementing the technical solution according to the appended claim, which comprises the following aspects:
a centrally positioned pitch control device for a coaxial double-propeller helicopter, the coaxial double-propeller helicopter comprising an upper propeller hub 2 and a lower propeller hub 18, a blade I 1 being mounted on the outside of the upper propeller hub 2, and a blade II 16 being mounted on the outside of the lower propeller hub 18, wherein the centrally positioned pitch control device is located between the upper propeller hub 2 and the lower propeller hub 18.

The centrally positioned pitch control device for a coaxial double-propeller helicopter is located at a middle part of a central shaft 19 between the upper propeller hub 2 and the lower propeller hub 18.

The middle part of said central shaft 19 protrudes along a circumference to form a stepped cross arm, an upper outer shaft 20 provided at an upper end of the cross arm on the outside of the central shaft 19, a lower outer shaft 28 provided at a lower end of the cross arm on the outside of the central shaft 19, and a sector reversing gear 24 provided on an upper end face and lower end face of the cross arm at the middle part of the central shaft 19 via a bearing 25;
wherein a conical gear I 26 is provided on the upper end of the lower outer shaft 28, a lower variable pitch ring 14 and a lower swash plate 15 are provided in succession downwards, with the conical gear I 26 meshing with the lower part of the sector reversing gear 24;
wherein a conical gear II 22 is provided on the lower end of the upper outer shaft 20, an upper variable pitch ring 3 and an upper swash plate 5 are provided in succession upwards, with the conical gear II 22 meshing with the upper part of the sector reversing gear 24;
wherein outer ends of the upper variable pitch ring 3 and the lower variable pitch ring 14 are respectively provided with a rocker I 7 and a rocker 11 12, with the outer ends of the rocker I 7 and the rocker II 12 respectively hinging with the upper swash plate 5 and the lower swash plate 15 via a connecting rod I 6 and a connecting rod II 13;
wherein the upper swash plate 5 and the lower swash plate 15 are respectively hinged with the upper propeller hub 2 and the lower propeller hub 18 via a connecting rod I 4 and a connecting rod II 17; and
wherein an outer end of the cross arm at the middle part of the central shaft 19 is provided with a gear box 11, the gear box 11 internally comprises the conical gear I 26 on the upper end of the lower outer shaft 28, the lower end of the upper outer shaft 20 provided with the conical gear II 22, and the sector reversing gear 24 provided at the upper and lower end faces of the cross arm at the middle part of the central shaft 19 via the bearing 25, the outside of the gear box 11 is provided with a main steering gear 9 and a course steering gear 8, the main steering gear 9 is hinged with the middle parts of the rocker I 7 and the rocker II 12 via its upper and lower output shafts, the course steering gear 8 is hinged with one end of an upper rocker 29 and a lower rocker 30 via its upper and lower output shafts, while the other ends of the upper rocker 29 and the lower rocker 30 are respectively hinged with the upper variable pitch ring 3 and the lower variable pitch ring 14, and middle parts of the upper rocker 29 and the lower rocker 30 are respectively hinged with the gear box 11.

The device according to the present invention has the advantages of simple structure, high control precision, good stability, low manufacturing difficulty, and saving space for the helicopter.

### Brief Description of the Drawings

Fig 1 is a structural diagram of a centrally positioned pitch control device for a coaxial double-propeller helicopter.
Fig 2 is a section view of part A in Fig 1.

In the Figs: 1. blade I; 2. upper propeller hub; 3. upper variable pitch ring; 4. connecting rod I; 5. upper swash plate; 6. connecting rod I; 7. rocker I; 8. course steering gear; 9. main steering gear; 10. wire II; 11. gear box; 12. rocker II; 13. connecting rod II; 14. lower variable pitch ring; 15. lower swash plate; 16. blade II; 17. connecting rod II; 18. lower propeller hub; 19. central shaft; 20. upper outer shaft; 22. gear II; 24. reversing gear; 25. Bearing; 26. gear I; 27. wire I; 28. lower outer shaft; 29. upper rocker; 30. lower rocker.

### Detailed Description of the Embodiments

A detailed description of the technical solution according to the present invention is provided below with reference to the accompanying drawings.

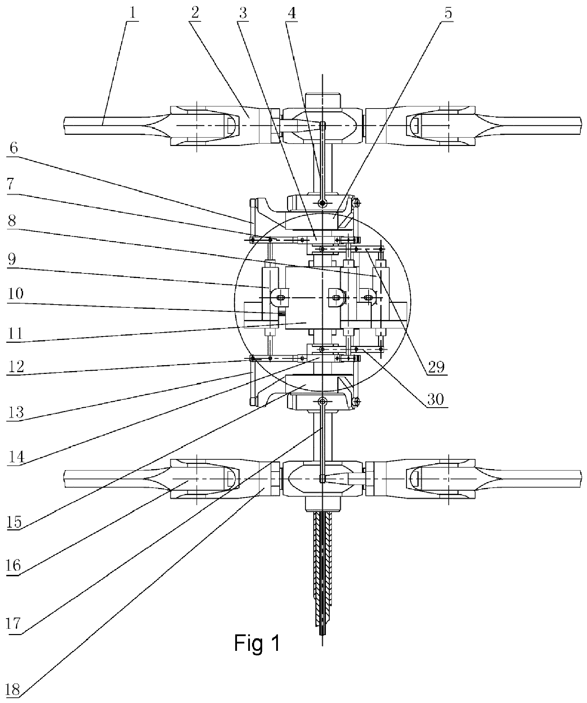

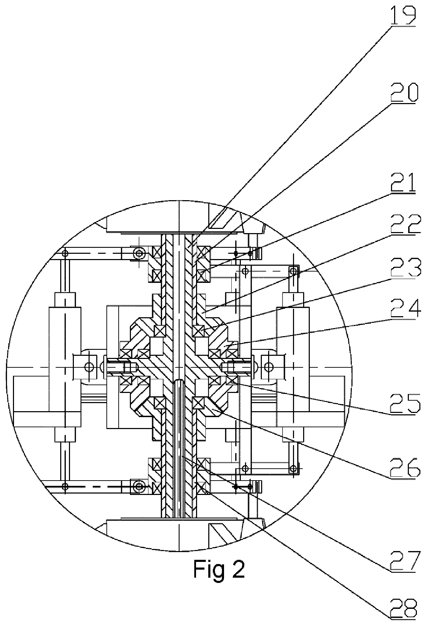

An exemplary centrally positioned pitch control device for a coaxial double-propeller helicopter according to the present invention is illustrated in Figures 1 and 2. The coaxial double-propeller helicopter comprises an upper propeller hub 2 and a lower propeller hub 18, a blade I 1 being mounted on the outside of the upper propeller hub 2, and a blade II 16 being mounted on the outside of the lower propeller hub 18, characterized in that:
the middle part of the central shaft 19 protrudes along the circumference to form a stepped cross arm, an upper outer shaft 20 is provided at an upper end of the cross arm on the outside of the central shaft 19, a lower outer shaft 28 is provided at a lower end of the cross arm on the outside of the central shaft 19, and a sector reversing gear 24 is provided on an upper end face and lower end face of the cross arm at the middle part of the central shaft 19 via a bearing 25;
a conical gear I 26 is provided on the upper end of the lower outer shaft 28, a lower variable pitch ring 14 and a lower swash plate 15 are provided in succession downwards, with the conical gear I 26 meshing with the lower part of the sector reversing gear 24;
a conical gear II 22 is provided on the lower end of the upper outer shaft 20, an upper variable pitch ring 3 and an upper swash plate 5 are provided in succession upwards, with the conical gear II 22 meshing with the upper part of the sector reversing gear 24;
outer ends of the upper variable pitch ring 3 and the lower variable pitch ring 14 are respectively provided with a rocker I 7 and a rocker II 12, with the outer ends of the rocker I 7 and the rocker II 12 respectively hinging with the upper swash plate 5 and the lower swash plate 15 via a connecting rod I 6 and a connecting rod II 13;
the upper swash plate 5 and the lower swash plate 15 are respectively hinged with the upper propeller hub 2 and the lower propeller hub 18 via a connecting rod I 4 and a connecting rod II 17; and
an outer end of the cross arm at the middle part of the central shaft 19 is provided with a gear box 11, wherein the gear box 11 internally comprises the conical gear I 26 on the upper end of the lower outer shaft 28, the lower end of the upper outer shaft 20 provided with the conical gear II 22, and the sector reversing gear 24 provided at the upper and lower end faces of the cross arm at the middle part of the central shaft 19 via the bearing 25, wherein the outside of the gear box 11 is provided with a main steering gear 9 and a course steering gear 8, the main steering gear 9 is hinged with the middle parts of the rocker I 7 and the rocker II 12 via its upper and lower output shafts, the course steering gear 8 is hinged with one end of an upper rocker 29 and a lower rocker 30 via its upper and lower output shafts, while the other ends of the upper rocker 29 and the lower rocker 30 are respectively hinged with the upper variable pitch ring 3 and the lower variable pitch ring 14, and middle parts of the upper rocker 29 and the lower rocker 30 are respectively hinged with the gear box 11.

The working principle and process of the device in this invention are as follows: the central shaft 19 is fixed so as to be immobile, and when driving the lower outer shaft 28 to rotate, the lower propeller hub 18 is driven, and the gear 26 is driven to rotate; then the gear 22 and the upper outer shaft 20 are driven to rotate, via the reversing gear 24; and the upper outer shaft 20 and the lower outer shaft 28 rotate in opposite directions at the same speed, the upper outer shaft 20 driving the upper propeller hub 2 to rotate. The upper and lower output shafts of the main steering gear 9 move in the same direction, the upper output shaft driving the rocker I 7 to swing and subsequently driving the connecting rod 6, the upper swash plate 5, the connecting rod 4 and the upper propeller hub 2 to rotate, thereby controlling the angle of attack of the blade I 1. Control of the angle of attack of the blade II 16 is the same as the above mentioned control of the blade II. The upper and lower output shafts of the course steering gear 8 move in opposite directions, with the upper output shaft driving the rocker 29 to swing, which further drives the upper variable pitch ring 3 to move up and down, followed by driving the rocker I 7 to swing and driving the connecting rod 6, the upper swash plate 5, the connecting rod 4 and the upper propeller hub 2 to rotate, thereby controlling the principal distance of the blade I 1. Control of the principal distance of the blade II 16 is the same as the above-mentioned control of the blade I 1. Course control of the helicopter is realized by controlling the principal distance differentials of the blade I 1 and the blade II 16.

Compared with the prior art, the device according to the present invention has the advantages of simple structure, high control precision, good stability and low manufacturing difficulty, as well as saving space for the helicopter.

## Claims

1. A pitch control device for a coaxial double-rotor helicopter, configured to be located between an upper rotor hub (2) and a lower rotor hub (18) of the helicopter, the device comprising:
a central shaft (19) configured to be fixed so as to be immobile, and forming a stepped cross arm protruding from the middle part of said central shaft (19);
an upper outer shaft (20) provided above the cross arm on the outside of the central shaft (19), and configured to transmit drive to the upper rotor hub (2);
a lower outer shaft (28) provided below the cross arm on the outside of the central shaft (19), and configured to transmit drive from the lower rotor hub (18);
a sector reversing gear (24) mounted on an outer end of the cross arm via a bearing (25);
a first conical gear (26) provided at the upper end of the lower outer shaft (28), and meshing with a lower part of the sector reversing gear (24);
a second conical gear (22) provided at the lower end of the upper outer shaft (20) and meshing with an upper part of the sector reversing gear (24);
an upper variable pitch ring (3) above the second conical gear (22), and configured to move up and down along the central shaft (19);
a lower variable pitch ring (14) below the first conical gear (26), and configured to move up and down along the central shaft (19);
an upper swash plate (5) above the upper variable pitch ring (3), and configured to be hinged with the upper rotor hub (2) via a first connecting rod (4);
a lower swash plate (15) below the lower variable pitch ring (14), and configured to be hinged with the lower rotor hub (18) via a second connecting rod (17);
a first rocker (7) extending out from the upper variable pitch ring (3), with an outer end of the first rocker (7) hinged with the upper swash plate (5) via a third connecting rod (6);
a second rocker (12) extending out from the lower variable pitch ring (14), with an outer end of the second rocker (12) hinged with the lower swash plate (15) via a fourth connecting rod (13);
a gear box (11) to which the outer end of the cross arm at the middle part of the central shaft (19) is connected, wherein the first conical gear (26), the second conical gear (22), and the sector reversing gear (24) are inside the gear box (11);
a main steering gear (9) connected to the outside of the gear box (11), and
hinged with middle parts of the first rocker (7) and the second rocker (12) via respective upper and lower output shafts which are configured to move in the same direction;
a course steering gear (8) connected to the outside of the gear box (11), and having upper and lower output shafts which are configured to move in the opposite directions;
an upper rocker (29) having a first end part hinged to the upper output shaft of the course steering gear (8), a second, opposite, end part hinged with the upper variable pitch ring (3) and a middle part hinged on the gear box (11);
a lower rocker (30) having a first end part hinged to the lower output shaft of the course steering gear (8), a second, opposite, end part hinged with the lower variable pitch ring (14), and a middle part hinged on the gear box (11).

## Patentansprüche

1. Zurücksetzen einer koaxialen dual Rotor Hubschrauber Tonhöhe Steuergeräte, dual Rotor Koaxial Hubschrauber einschließlich der Hub (2) und niedrigere Rotornabe (18), die Nabe (2) seitliche Klinge ich (1), der nächste Hub (18) mit seitlichen Klinge II (16), seine Merkmale sind: Middle Luftschraubenverstellung auf dem Gerät befindet sich in der Nabe (2) und die untere Rotornabe (18);
mittlerer Tonhöhe Steuergerät befindet sich auf der Nabe (2) und die untere Rotornabe (18) zwischen der Welle (19) zentral;
Der in der Achse (19) sagte Central entlang Kreises ausgelöst gebildet Schritte wie Kreuz arm, in der Achse (19) außerhalb Seite, Kreuz arm Top mit SISU-Achse (20), in der Achse (19) außerhalb der Seite und cross Arm unten mit Xia außerhalb der Achse (28), in der Achse (19) Central Cross Arm Shang und untere Fläche durch Lager (25) mit Ventilator Wendegetriebe (24);
Der unteren Welle (28) konische Spitze Gang ich (26), wiederum mit der nächsten Pitch down Ring (14) und die untere Taumelscheibe (15), konische Zahnräder ich (26) und Sektor-Rückwärtsgang (24) untere Masche;
Hauptachse (20) konischer Boden Getriebe II (22), wiederum mit einem Stellplatz am Ring (3) und obere Taumelscheibe (5), konischer Gear II (22) und Rückwärtsgang (24) oberen Gitter Sektor;
Variable aus Ring (3) und Xia Variable vom Ring (14) der äußeren Ende bzw. mit schütteln Arm I 7 und Shake II (12), schütteln Arm I 7 und Shake II (12) außerhalb Ende bzw. durch Stab I (6) und Rod II (13) und Shang "schräg Arm Arm" Scheibe (5) und Neigung Disc (15) schwenkbar;
Geneigte Platte (5) und die untere Taumelscheibe (15) durch die Pleuelstange artikuliert I (4) und Rod II (17) und die Nabe (2) und die untere Rotornabe (18);
In der Achse (19) Central Cross Arm außerhalb mit Getriebe Box (11), Getriebe Box (11) innerhalb einschließlich außerhalb der Achse (28) Anfang der konische Getriebe ich (26) und Achse (20) Unterseite mit kegeliger Gear II (22) und der Achse (19) Central Cross Arm Shang und untere Fläche durch Lager (25) Installation des Lüfters Wendegetriebe (24), Getriebe Box (11) außerhalb Gerät hat Hauptruder Maschine (9) und Überschrift-Ruder-Maschine (8), Hauptruder Maschine (9) durch Ausgabe Achse und schüttelt arm I 7 schütteln Arm II (12) zentral schwenkbar, Überschrift Ruder Maschine (8) über die Ausgabe Achse und schütteln Arm (29) und schütteln Arm (30) Ende, die Abteilung schwenkbar, schütteln Arm (29) und schütteln bzw. Arm (30) von einem anderen Ende und Variablen vom Ring (3) und vom Ring (14) schwenkbar, schütteln Arm (29) und schütteln bzw. Arm (30) Mittel- und Getriebe Box (11) schwenkbar.

## Revendications

1. C'est un dispositif de commande qui est utilisé pour la distance d'hélice au milieu sur un co-axe hélicoptère de double hélices, celui-ci comporte un haut porte-hélice (2) et un bas porte-hélice (18), à côté de ces deux porte-hélices, les pelles I et II sont installées respectivement, sa caractéristique: ce dispositif de commande de la distance d'hélice au milieu se trouve entre le haut porte-hélice (2) et le bas porte-hélice (18) ;
ce dispositif de commande de la distance d'hélice au milieu se trouve au centre de l'axe médian (19) qui est entre le haut porte-hélice (2) et le bas porte-hélice (18) ;
Le milieu de l'axe médian (19) se dresse en suivant le périmètre du cercle et se forme en une moise avec forme d'étape,et à côté latérale de l'axe médian (19), le haut de la moise se dispose un axe extérieur en haut(20), à côté latérale de l'axe médian (19) et le bas de la moise se dispose un axe extérieur en bas (28), et au centre de l'axe médian (19), la surface haut et bas duquel s'installe un pignon de commutation en éventail (24) en utilisant un roulement (25);
A l'extrémite supérieure de l'axe extérieur en bas (28) s'installe un pignon conique I (26), et successivement vers le bas il y a encore l'anneau de pas variable en bas (14) et plateau cyclique en bas (15), le pignon conique I(26) et la partie inférieure du pignon de commutation en éventail (24)s'engrènent;
A l'extrémité inférieure de l'axe extérieur en haut (20) s'installe un pignon conique II (22),et successivement vers le haut il y a encore l'anneau de pas variable en haut(3) et le plateau cyclique en haut (5), le pignon conique II (22) et le pignon de commutation en éventai (24) s'engrènent;
Aux côtés latérales des anneaux de pas variable en haut(3) et en bas (14) posent respectivement la bielle pendante I (7) et la bielle pendante II (12), à l'extrémité de ces deux bielles pendantes en utilisant la bielle I (6) et la bielle II (13) à articuler avec les plateaux cycliques en haut (5) et en bas (15);
En traversant la bielle I (4) et la bielle II (17), les plateaux cycliques en haut (5) et en bas (15) articulent avec les porte-hélices en haut (2) et en bas (18) ;
Au centre de l'axe médian (19) pose la boîte de vitesse (11), y compris le pignon conique I (26) au supérieur de l'axe extérieur en bas (28), à l'inférieur de l'axe extérieur en haut (20) pose le pignon conique II (22) et au centre de l'axe médian (19), les deux bouts de la moise à travers le roulement (25) s'installe le pignon de commutation en éventail (24), au dela de la boîte de vitesse (11), il installe l'appareil de barre principale (9) et l'appareil de la barre directionnelle (8), celui-là (9) articule avec les parties médianes des moises I (7) et II (12) à travers de l'arbre de sortie en haut et en bas, et celui-ci (8) articule avec chaque un bout de la moise en haut (29) et en bas (30) à travers de l'arbre de sortie en haut et en bas, l'autre bout de la moise en haut (29) et en bas (30) articule respectivement l'anneau de pas variable en haut (3) et en bas (14), la partie médiane de la moise en haut (29) et en bas (30) articule respectiveùent avec la boîte de vitesse (11).
